# EUROPÄISCHE PATENTANMELDUNG

(11) **EP 3 040 368 A1**
(43) Veröffentlichungstag der Anmeldung: **06.07.2016**
(21) Anmeldenummer: 15020129.1
(22) Anmeldetag: 28.07.2015
(51) Int. Cl.: C08J 9/12, C08J 9/14, C08J 9/18, C08J 9/232

(54) **NIEDERDICHTE, MIKROZELLULARE, GESCHLOSSENZELLIGE, THERMOPLASTISCHE SCHAUMSTOFFE UND IHRE HERSTELLUNG**

(30) Priorität: 05.08.2014 AT 6202014
(71) Anmelder: Austrotherm GmbH, 7423 Pinkafeld (AT)
(72) Erfinder: Dr. Heinrich Horacek, 4048 Puchenau (AT)
(74) Vertreter: Müllner, Martin

(57) **Zusammenfassung**

Die Erfindung betrifft niederdichte, mikrozellulare, geschlossenzellige thermoplastische Schaumstoffe und ihre Herstellung. Die Aufgabe bestand darin, Leichtbauteile zur Wärmeisolation mit verbesserten Eigenschaften im Vergleich mit den Marktprodukten zu entwickeln. Die Aufgabe konnte überraschend dadurch gelöst werden, dass Thermoplaste mit leichtflüchtigen Treibgasen bei hohen Treibgasdrücken und Raumtemperatur in Druckbehältern gelagert und anschließend in Wasserdampf aufgeschäumt wurden. Nach diesem neuen Verfahren wurden Schaumstoffe mit niedrigen Raumgewichten und sehr kleinen Zelldurchmessern erhalten. Diese hatten ein Aussehen wie Porzellan und zeigten als erwünschte Eigenschaften eine hohe Zug- und Druckfestigkeit sowie eine niedrige Wämeleitfähigkeit.

## Beschreibung

Gegenstand der vorliegenden Erfindung sind niedrigdichte, mikrozellulare, geschlossenzellige thermoplastische Schaumstoffe, die bislang weder durch Perlpolymerisation noch durch Extrusionsverfahren hergestellt werden konnten. Die technische Aufgabe bestand darin, Materialien herzustellen, die im Vergleich zu Marktprodukten höhere mechanische Werte und geringere Wärmeleitfähigkeiten bei niedrigem Raumgewicht aufwiesen. Thermoplastische Schaumstoffe mit Raumgewichten unter 50 kg/m³ und mit Zelldurchmessern kleiner 10µm und ihr Herstellverfahren waren bislang unbekannt.

Großtechnisch werden Polystyrolschaumstoffe nach zwei Verfahren hergestellt (1): Expandierfähige Polystyrolperlen mit Pentan als Treibgas werden durch Polymerisation in wässriger Dispersion bei Temperaturen von 80-115°C und Drücken bei 5-10 bar gewonnen. Diese werden in einem zweiten Arbeitsschritt in einem kontinuierlichen Vorschäumer mit Wasserdampf unter Rühren vorgeschäumt und zwischengelagert. In einem zweiten Arbeitsschritt werden Schüttungen dieser Perlen im Rauscherkasten vermittels Wasserdampf zu Blöcken verschäumt. Ihre Zelldurchmesser liegen bei 200-500 µm, ihre Rohdichten bei 10-35 kg/m³ und ihre Wärmeleitfähigkeiten bei 0,032-0,045 W/(m*K) Polystyrolschaumstoffplatten X-PS werden durch Extrusion hergestellt. Als Treibmittel dienen Kohlendioxid und Pentan. Die Extrusionstemperaturen liegen bei 100- 150°C und die Drücke erreichen Werte bis zu 160 bar. Man erhält Schaumstoffbahnen mit Raumgewichten zwischen 25- 45 kg/m3 und Zelldurchmesser zwischen 100 und 200 µm.

Stand der Technik sind auch geschlossenzellige thermoplastische Schaumstoffe mit Zelldurchmesser von 15- 100 µm bei Raumgewichten zwischen 200 und 800 kg/m³ (2-9) Auch offenzellige Schaumstoffe mit Rohdichten zwischen 35 und 50 kg/m³ und Zelldurchmessern von 0,01 und 0,03 µm, die Wärmeleitfähigkeiten von 0,45 bis 0,5 W/(m*K) aufweisen, werden in Patenten beschrieben. (10-11)

Nanoschaumstoffe aus Polyetherimiden, die mit Kohlendioxid geschäumt worden sind, haben Raumgewichte von 400kg/m³. (12-13)

Ebenso sind Nano-Schaumstoffe mit Zelldurchmesser kleiner 10 µm als Ärogele, Metall- und Kohlenstoff- Schaumstoffe bekannt.

Geschlossenzellige, thermoplastische Schaumstoffe mit niedrigen Raumgewichten und kleinen Zelldurchmessern sind bislang unbekannt und ihre Herstellung ist nirgends beschrieben. Ihre Herstellung ist Aufgabe der vorliegenden Erfindung und wird im Folgenden allgemein und dann anhand von Beispielen beschrieben.

Als Thermoplaste können Polymethylmetacrylate, Polystyrole, Styrolmischpolymerisate, wie Luran 378P (BASF), und Polyvinylchlorid verwendet werden.

Perlen und Körner aus Thermoplasten mit Durchmessern zwischen 0,1 und 3mm aber auch Formkörper beliebiger Geometrie werden in einem Autoklaven als solche oder in Wasser dispergiert mit Treibgasen beaufschlagt. Dabei nehmen sie Treibgase bis zu ihrer Sättigungskonzentration auf. Zur Zeit der Belüftung des Autoklaven darf die Temperatur nicht über jener der Glastemperatur des treibgashaltigen Thermoplasten liegen, weil dieser sonst spontan aufschäumen würde. Als Treibgase sind Gase mit hohen kritischen Druck und niedriger kritischer Temperatur besonders geeignet, beispielsweise Kohlendioxid mit tkrit= 31°C und pkrit= 73 bar, Äthylen mit tkrit= 10°C und pkrit= 51 bar oder Äthan mit tkrit=35°C und pkrit= 40 bar.

Die Lagerzeit im Druckbehälter ist so zu wählen, dass das ganze Volumen des Probekörpers gleichmäßig imprägniert ist. Ist eine gleiche Verteilung des gelösten Treibgases über den Kunststoff erreicht, wird der Autoklav entspannt, und die Probe entnommen. Die ungeschäumte Probe bzw. Proben werden entweder einstufig mit Wasserdampf geschäumt oder zweistufig zu Blöcken verschweißt.

### Beispiel 1

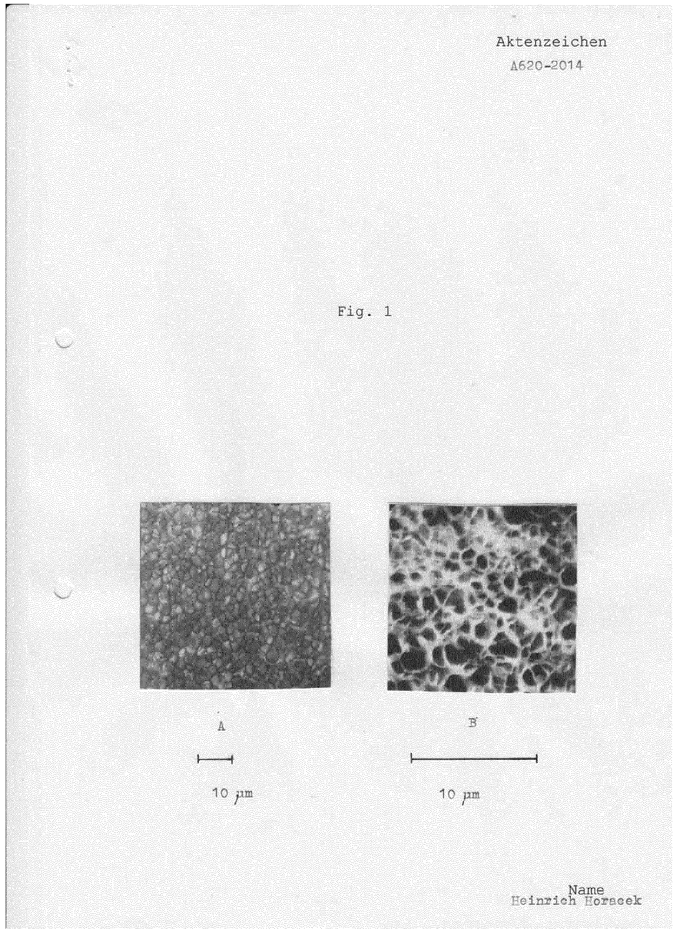

Körner aus Polystyrol 143 E (BASF) mit Durchmesser von 5mm werden in den Druckbehälter bei Raumtemperatur eingebracht und mit Kohlendioxid beaufschlagt bis der Druck im Autoklaven 70 bar erreicht hat. Ohne Rühren werden die Körner 3 Tage bei 70 bar und 23°C gelagert. Dann wird der Druckbehälter entspannt und die Proben entnommen. Durch Differenzwägung ergibt sich eine Kohlendioxidaufnahme von 10 Gew%. Anschließend werden die Körner in einem Vorschäumgerät in Wasserdampf unter Rühren aufgeschäumt. Bei einer Verweilzeit von 14 Minuten wird eine Rohdichte von 35 kg/m³ erreicht. Nach einer Zwischenlagerung werden die vorgeschäumten Körner zu einem Block mit Raumgewicht 30 kg/m³ und einer mittleren Zellgröße von 2µm verschweißt. Fig.1
A elektronenmikroskopische Aufnahme eines Schnittes der Probe, die mit Kohle bedampft worden ist: 5 Zellen/10µm
B Aufnahme mit einer Stereoscan Microsonde : 7 Zellen /10µm

### Beispiel 2

Beispiel 1 wird wiederholt, wobei die Körner in Wasser unter Rühren dispergiert werden. Das Volumenverhältnis beträgt 1:1. Nach 3 Tagen wird der Druckbehälter entspannt und die Körner über ein Sieb abgetrennt. Nach dem Trocknen haben die Körner einen Kohlendioxidgehalt von 9Gew%. Die Körner werden vorgeschäumt und nach einer Zwischenlagerung zu einem Block verschäumt mit 40 kg/m³ und einer Zellgröße von 1,5µm.

### Beispiel 3

Der Autoklav wird mit Normstäben aus Polystyrol 143E mit 20g Gewicht und den Abmessungen 1*2*10 cm³ beladen und mit Kohlendioxid begast. Die Imprägnierbedingungen sind wieder 70 bar und Raumtemperatur. Die Normstäbe weisen nach 3 Tagen Lagerung einen Kohlendioxidgehalt von 9Gew% auf. Sie werden in Wasserdampf 15 Minuten geschäumt und erreichen ein Raumgewicht von 46 kg/m³ und eine Zellgröße von 2µm.

### Beispiel 4

Polystyrolperlen mit 6mm Durchmesser werden im Druckbehälter in Wasser bei einem Flottenverhältnis von 1:1 mit Äthan begast. Die Lagerungsbedingungen sind Raumtemperatur und 38 bar. Nach 3 Tagen Lagerung wird der Behälter entspannt und die Perlen über ein Sieb abgetrennt. Nach dem Trocknen haben sie einen Treibmittelgehalt von 6 Gew%. Sie werden vorgeschäumt und anschließend zu einem Block verschweißt.

Der Block hat ein Raumgewicht von 30kg/m³ bei einer mittleren Zellgröße 6µm.

### Beispiel 5

Polystyrolperlen mit 6mm Durchmesser werden bei Raumtemperatur und einem Flottenverhältnis 1:1 mit 9 bar Propandruck beaufschlagt. Nach 3 Tagen haben die Perlen 8 Gew% Propan aufgenommen. Nach dem Vorschäumen in Wasserdampf bei einer Verweilzeit von 10 Minuten haben die Perlen ein Schüttgewicht von 20 kg/m3. Nach dem Ausschäumen erhält man einen Block mit 35 kg/m³ Raumgewicht und 10µm mittlere Zellgröße.

### Beispiel 6

Normstäbe aus Polystyrol 143 E mit 20g Gewicht werden bei Raumtemperatur und 38 bar Äthandruck gelagert.
Nach 3 Tagen beträgt die Äthankonzentration 7%. In Wasserdampf zeigen die Normstäbe ein Raumgewicht von 25 kg/m³ und eine Zellgröße von 7 µm.

In Tabelle 1 wird ein Vergleich zwischen den Marktprodukten EPS und XPS und den Schaumstoffen der Beispiele 1 bis 6 durchgeführt. Die Schaumstoffe werden durch ihr Raumgewicht nach DIN 53420, ihre Zellgröße, ihre Wärmeleitfähigkeit nach DIN 52612 und Zugfestigkeit nach DIN 53530 charakterisiert.
Aus der Tabelle 1 ist der technische Fortschritt der erfindungsgemäßen Schaumstoffe ersichtlich.

**Tabelle 1**

| Probe | Raumgewicht | Zugfestigkeit | Wärmeleitfähigkeit | Zelldurchmesser |
|---|---|---|---|---|
| | kg/m³ | MPa | W/(m*K) | µm |
| EPS | 20 | 0,3 | 0,03 | 300 |
| XPS | 40 | 0,5 | 0,035 | 150 |
| Beispiel 1 | 30 | 0,6 | 0,025 | 2 |
| Beispiel 2 | 40 | 0,6 | 0,025 | 1,5 |
| Beispiel 3 | 46 | 25 | 0,027 | 2 |
| Beispiel 4 | 30 | 0,7 | 0,028 | 6 |
| Beispiel 5 | 35 | 0,5 | 0,029 | 9 |
| Beispiel 6 | 25 | 15 | 0,028 | 7 |

Nach Tabelle 1 sind die Schaumstoffe der Beispiele härter, sie haben höhere Zugfestigkeiten im Stück und eine geringere Wärmeleitfähigkeit.
Aufgrund ihres Eigenschaftsprofiles sind sie als Leichtbauteile mit verbesserter Isolierwirkung und verbesserten mechanischen Werten einsetzbar.

### Beispiel 7

Polymethylmethacrylat Granulat mit der Bezeichnung Plexiglas 8N der Fa. Evonik wurde bei Raumtemperatur mit 55 bar Kohlendioxid im Autoklaven beaufschlagt. Nach 3 Tagen hatte das Granulat 10% Kohlendioxid aufgenommen. Es wurde dem Autoklaven entnommen und in Wasserdampf geschäumt. Es wurde ein Schaumstoff mit der Dichte 25kg/m³ erhalten

### Beispiel 8

PVC Granulat der Type 4201 (Fa. West) wurde 3 Tage im Autoklaven bei Raumtemperatur und 100 bar Kohlenstoffdioxiddruck gelagert. Das Granulat hatte 6% Kohlendioxid aufgenommen und wurde anschließend in Wasserdampf zu einer Dichte von 30kg/m³ geschäumt.

### Beispiel 9

Das Styrolmischpolymerisat Luran 378P (BASF) wurde als Granulat bei 70 bar CO₂-Druck und bei Raumtemperatur gelagert. Nach 3 Tagen hatte es 8% CO₂ aufgenommen. Nach dem Schäumen in Wasserdampf wurde ein Schaumstoff mit der Dichte 25kg/m³ erhalten.

Charakteristische Werte der Beispiele 7- 9 sind in Tabelle 2 zusammengestellt.

**Tabelle 2**

| Probe | Raumgewicht | Zugfestigkeit | Wärmeleitfähigkeit | Zelldurchmesser |
|---|---|---|---|---|
| | kg/m³ | MPa | W/(m*K) | µm |
| Beispiel 7 | 25 | 0,9 | 0,026 | 5 |
| Beispiel 8 | 29 | 0,7 | 0,029 | 3 |
| Beispiel 9 | 25 | 0,6 | 0,027 | 4 |

### Literatur:

1) Schuch, H., in Becker/ Braun, Kunststoff Handbuch 4 "Polystyrol" Hsg. Gausepohl, H., Gellert, R., Hanser Verlag, München, 1996, p. 599-614
2) Alsoy, S., Duda, J.L., Chem. Eng. Technol. 1999, 22, p. 971- 973
3) Han, X., Shen, J., Huang H., Tomasko, D.L., Lee L. J., Polym. Eng. Sci. 2007, 47, p. 103- 111
4) Tsivintzelis, I.., Angelopoulou, A.G., Panayiotou, C., Polym. 2007, 48, p.5928-5939
5) Aubert ,J.H., Sylvester, A.P., Chemtech May 1991, p.290-295
6) Hilic, S., Boyer, S.A.E., Padua, A.A.H., Grolier, J.P.E., J. of Pol. Sci. Part B, 2001, 39, p. 2063-2070
7) Kwang, C., Manke, C.W., Gulari E., J. of Pol. Sci. Part B: Polymer Physics, 1999, 37, p. 2771-2781
8) Walker, T.A., Frankowski, D.J., Spontak, R.J., Adv. Mater. 2008, 20, p.879- 898
9) Arora, K.A., Lesser, A.J., Mc Carthy, T.J., Macromolecules, 1998, 31, p. 4614- 4620
10) US Pat. 5674916, C.D. Shmidt, et al. 10/7/97 "Extruded, open-cell microcellular Alkenylaromatic polymer Foams and process for making"
11)US Pat. 5679718, K.W. Suh, et al. 10/21/97 "Microcellular foams containing an infrared attenuating agent and a method of using"
12) Hendrik, J.L., Carter, K.R., Cha,H.J. und andere, Reactive and Functional Polymers 1996, 30, Issue 1-3 p.43- 53 "High temperature polyimide nanofoams for microelectronic applications."
13) Hofland, G.W., Kersch, Ch., Woerlee G.F., FeyeCon Development and Inplementation, Rijnkade, gerard@feyecon.com

## Patentansprüche

1. Herstellverfahren **dadurch gekennzeichnet, dass** Polystyrole als Perlen, Körner oder Formkörper in mm bis cm Dimensionen in einem Autoklaven ohne Rühren oder unter Rühren in Wasser dispergiert bei Raumtemperatur mit Gasen, deren
Drücke, Temperaturen und Volumina unterhalb der kritischen Werte liegen, beaufschlagt werden und anschließend nach der Entnahme im ungeschäumten Zustand in Wasserdampf geschäumt werden.

2. Anspruch nach 1 weiter **dadurch gekennzeichnet, dass** die unterkritischen Gasen Kohlendioxid oder Kohlenwasserstoffe mit 1 bis 3 Kohlenstoffatomen sind.

3. Nach Anspruch 1-2 **dadurch gekennzeichnet, dass** der Druck der Gase so bemessen wird, dass die gequollenen Polystyrole Glastemperaturen größer Raumtemperatur aufweisen.

4. Nach Anspruch 1-3 **dadurch gekennzeichnet, dass** sie nach der Entnahme aus dem Autoklaven einstufig oder zweistufig in Wasserdampf aufgeschäumt werden.

5. Nach Anspruch 1-4 **dadurch gekennzeichnet, dass** die Polystyrole Graphite, Pigmente, Stabilisatoren, Keimbildner und Flammschutzmittel enthalten.

6. Nach Anspruch 1-5 **dadurch gekennzeichnet, dass** das bevorzugte Gas Kohlendioxid ist.

7. Nach Anspruch 1-6 **dadurch gekennzeichnet, dass** der nach diesem Verfahren hergestellte Polystyrolschaumstoffe Raumgewichte kleiner 50 bevorzugt kleiner 30 kg/m³ und Zellgrößen kleiner 20 bevorzugt kleiner 5µm aufweist.
